# EUROPÄISCHE PATENTSCHRIFT

(11) **EP 3 088 887 B1**
(45) Veröffentlichungstag und Bekanntmachung des Hinweises auf die Patenterteilung: **16.08.2017**
(21) Anmeldenummer: 15001305.0
(22) Anmeldetag: 01.05.2015
(51) Int. Cl.: G01N 30/12, G01N 1/22

(54) **VORRICHTUNG ZUR EXTRAKTION FLÜCHTIGER KOMPONENTEN**
DEVICE FOR EXTRACTING VOLATILE COMPONENTS
DISPOSITIF D'EXTRACTION DE COMPOSANTS VOLATILES

(43) Veröffentlichungstag der Anmeldung: 02.11.2016
(73) Patentinhaber: CTC Analytics AG, 4222 Zwingen (CH)
(72) Erfinder: Cretnik, Stefan Anton, 4203 Grellingen (CH); Schüler, Kai Heinrich, 9114 Hoffeld (CH); Zumbach, Melchior, 5600 Lenzburg (CH)
(74) Vertreter: Kessler, Stephan

(56) Entgegenhaltungen:
- EP-A1- 2 775 298
- US-B1- 6 365 107

## Beschreibung

### Technisches Gebiet

Die Erfindung betrifft eine Vorrichtung zur Extraktion einer flüchtigen Komponente aus einer Probe, insbesondere einer Flüssigkeitsprobe.

### Stand der Technik

Im Stand der Technik sind unterschiedliche Vorrichtungen zur Extraktion von flüchtigen Komponenten, wie beispielsweise flüchtige organische Komponenten (volatile organic compound - VOC), aus einer Probe bekannt. Insbesondere ist es erwünscht, flüchtige Komponenten aus einer Probe in die Gasphase zu überführen und diese anschliessend zu sammeln, beispielsweise in einer Säule mit geeignetem Sorbtionsmaterial.

Besonders auf dem Gebiet der Umweltanalytik werden derartige Extraktionsvorrichtungen zum Nachweis von Verunreinigungen in Wasser- oder Bodenproben verwendet. Dabei werden die extrahierten flüchtigen Komponenten in einer Trapsäule gesammelt und anschliessend durch Einwirkung von Hitze aus dieser verflüchtigt, wobei die flüchtigen Komponenten in ein Analysegerät, insbesondere einen Gaschromatographen überführt werden, wo diese aufgetrennt, identifiziert und auch quantifiziert werden können.

Auf diesem Gebiet hat sich insbesondere das sogenannte "purge and trap" Verfahren etabliert. Bei diesem Verfahren wird eine Probe von einem inerten Gas durchströmt. Dabei gehen flüchtige Komponenten aus der Probe in die Gasphase über. Diese Komponenten werden anschliessend an einem geeigneten Sorbtionsmaterial oder in einer Kältefalle gesammelt. Im abschliessenden Austreibvorgang wird die Falle aufgeheizt, so dass die flüchtigen Komponenten in einen Gaschromatographen überführt werden können.

Die EP 0 590 932 A1 (Peters A.) offenbart ein Trap-System mit einer Trapsäule, insbesondere für die Chromatographie. Das System umfasst unter anderem eine Vakuumpumpe, welche über ein Ventil mit der Ausgangsöffnung der Trapsäule sowie mit der Eingangsöffnung einer Trennsäule verbunden ist, sowie eine Quelle für ein Trägergas. Durch Anschalten der Vakuumpumpe wird ein Analyt durch den entstehenden Unterdruck in die Trapsäule, welche als Kältefalle ausgestaltet ist, gezogen. Gleichzeitig wird die Trennsäule rückgespült. Anschliessend können durch Abtrennen der Vakuumpumpe vom System und dem Einströmen des Trägergases durch die Eingangsöffnung der Trapsäule und Erhitzen derselben die in der Kältefalle gesammelten Moleküle in die Trennsäule gespült und anschliessend einem GC zugeführt werden. Die Innenwandung der Trapsäule kann mit einem porösen Polymer beschichtet sein.

Die US 6,395,560 B1 (Merkelov M.) beschreibt eine Headspace-Vorrichtung, welche in einem purge and trap Verfahren eingesetzt werden kann. Der vom Headspace durch das Trägergas abgeführte Analyt kann in einer Trap aufkonzentriert werden. Trägergas und Analyt, welche in der Trap nicht zurückgehalten werden, können entweder in die Atmosphäre entlassen oder aufgefangen werden, beispielsweise in einer Heliumtrap.

Die US 6,365,107 B1 bezieht sich auf eine Headspace-Vorrichtung, bei welcher eine Störung des thermodynamischen Gleichgewichts im Probengefäss durch die Analytentnahme nicht unterbrochen wird. Hierzu weist die Vorrichtung zwei Kolbenspritzen auf, wobei über eine erste Kolbenspritze ein definiertes Volumen an Analyt entnommen und gleichzeitig mittels der zweiten Kolbenspritze dasselbe Volumen eines Inertgases in das Probengefäss eingespritzt wird.

Ein wesentlicher Nachteil bei bestehenden purge-and-trap Systemen ist, dass das verwendete Inertgas in die Atmosphäre entlassen wird. Einerseits verursacht dies Kosten, da verbrauchtes Inertgas für weitere Analysen nicht mehr zur Verfügung steht, anderseits besteht die Gefahr, dass gelöste flüchtige Stoffe, welche nicht im Sorbtionsmaterial oder der Kältefalle zurückgehalten werden, die Luft in einem Analyselabor belasten. Da es sich mitunter um karzinogene Stoffe handeln kann, ist letzterer Punkt ein wesentlicher Nachteil der vorbekannten purge-and-trap Systeme. Ferner kann der Verlust von flüchtigen Stoffen zu einer fehlerhaften quantitativen Messung führen. Zudem erfolgt die Extraktion der löslichen Komponenten stets bei einem Überdruck im Probengefäss, was generell zu einem schlechteren Ausgasen der löslichen Komponenten führt.

### Darstellung der Erfindung

Aufgabe der Erfindung ist es, eine dem eingangs genannten technischen Gebiet zugehörende Vorrichtung zu schaffen, mit welcher der Gasverbrauch und die Belastung der umliegenden Atmosphäre mit flüchtigen Komponenten gesenkt werden kann.

Die Lösung der Aufgabe ist durch die Merkmale des Anspruchs 1 definiert. Gemäss der Erfindung umfasst eine Vorrichtung zur Extraktion flüchtiger Komponenten aus einer Probe ein Probengefäss zur Aufnahme der Probe, wobei das Probengefäss gasdicht verschlossen ist. Ferner verfügt die Vorrichtung über eine Ableitung sowie über eine Zuleitung, welche in das Probengefäss ragen. Die Zuleitung umfasst ein erstes Ventil, mit dem sich ein Gasfluss durch die Zuleitung drosseln und/oder unterbrechen lässt. Eine Ansaugöffnung einer Pumpe ist über eine erste Fluidleitung mit der Ableitung fluidisch verbunden. Eine zweite Fluidleitung verbindet die Zuleitung mit einer Austrittsöffnung der Pumpe fluidisch, so dass Probengefäss, Zuleitung, Ableitung und Pumpe einen geschlossenen Gaskreislauf bilden. Ein Fallenelement mit wenigstens einem Sorbtionsmaterial ist fluidisch mit der ersten oder der zweiten Fluidleitung verbunden.

Durch die erfindungsgemässe Vorrichtung wird der Gasverbrauch erheblich gesenkt. Zudem wird eine Kontamination der Umgebung durch lösliche Komponenten, welche im verwendeten Fallenelement nicht zurückgehalten werden, verhindert. Durch das kontinuierliche Absaugen des Gases lässt sich während der Extraktion im Probengefäss ein Unterdruck erreichen, was das Ausgasen der flüchtigen Komponenten erhöht. Da ein geschlossener Gaskreislauf vorliegt hat die Vorrichtung den weiteren Vorteil, dass keine Limitierung durch eine "breakthrough capacity" vorliegt, d. h. dass theoretisch ein unendliches Gasvolumen durch das Fallenelement geleitet werden kann, ohne dass extrahierte flüchtige Substanzen aus dem System verlorengehen können. Zudem lassen sich die Druckverhältnisse innerhalb des Probengefässes sowie des Fallenelements durch die Leistung der Pumpe sowie des ersten Ventils kontrollieren und verändern.

Vorzugsweise liegt die Probe als Feststoff oder als Flüssigkeit vor. Dabei bleibt im Probengefäss oberhalb der Probe ein Gasraum, der sogenannte Headspace, bestehen. Nach dem Einbringen der Probe in das Probengefäss, welches vorzugsweise aus Glas oder einem chemikalienbeständigen Polymer besteht, wird dieses gasdicht verschlossen, beispielsweise mit einem Stopfen, Deckel, Septum oder ähnlichem.

Die Zuleitung und die Ableitung können am Probengefäss selbst, beispielsweise in der Form von Anschlussstutzen, welche mit den Fluidleitungen verbindbar sind, ausgebildet sein. Alternativ kann auch der Verschluss des Probengefässes über die Zu- und Ableitung verfügen oder mit diesen verbindbar sein. Ferner ist auch denkbar, dass die Zu- und Ableitung nach dem Verschliessen des Probengefässes in dieses gesteckt werden, zum Beispiel über geeignete Öffnungen. Wie ein Fachmann erkennt, muss der Anschluss der Zu- und Ableitung zum Probengefäss gegenüber der Atmosphäre gasdicht ausgebildet sein.

Die Zuleitung verfügt vorzugsweise über ein Drosselventil, mit dem sich ein Gasfluss in das Probengefäss reduzieren oder unterbrechen lässt. Alternativ kann die Zuleitung auch über ein Sperrventil verfügen, mit dem sich der Gasfluss unterbrechen lässt. Durch diese Reduktion oder Unterbrechung des durch die Zuleitung in das Probengefäss einfliessenden Gases kann über die Pumpe ein Unterdruck im Probengefäss erzeugt werden, was das Ausgasen der flüchtigen Komponenten begünstigt beziehungsweise beschleunigt. Zudem kann dadurch gleichzeitig im Fallenelement ein Überdruck erzeugt werden, wodurch die Kapazität des Fallenelements und damit auch die Ausbeute der Extraktion erhöht werden kann.

Die Fluidleitungen können in einer beliebigen Form vorliegen, beispielsweise als Schläuche, Kapillaren, Glasröhren, etc. Als Pumpe kann jede zur Förderung von Gas geeignete Pumpe eingesetzt werden. Besonders bevorzugt wird eine Pumpe eingesetzt, welche eine kontinuierliche Förderung von Gas ermöglicht, wie beispielsweise Rotationskolbenpumpen oder peristaltische Pumpen. Alternativ können auch zyklische Pumpen, wie Kolben- oder Membranpumpen eingesetzt werden. Geeignete Pumpen sind einem Fachmann auf dem Gebiet bekannt.

Das Fallenelement verfügt über ein geeignetes Sorbtionsmaterial, wie beispielsweise ein poröses Polymer auf der Basis von 2,6-diphenyl-p-phenylenoxid, welches unter dem Markennamen Tenax® von der Firma Buchem BV vertrieben wird. Je nach Art der zu extrahierenden Stoffe kann ein geeignetes Sorbtionsmaterial für die Falle verwendet werden. Alternativ kann als Falle auch eine Kältefalle verwendet werden.

Vorzugsweise wird die Vorrichtung nach dem Verschliessen des Probengefässes mit einem Inertgas wie Helium, Stickstoff, Kohlenstoffdioxid oder Argon geflutet, wobei vorhandene Luft über ein Ventil aus der Vorrichtung entfernt wird.

Vorzugsweise ist das Fallenelement lösbar mit der ersten oder der zweiten Fluidleitung verbunden.

Das Fallenelement kann daher in Gasflussrichtung vor oder nach der Pumpe mit der ersten beziehungswiese der zweiten Fluidleitung verbunden sein. Vorzugsweise ist das Fallenelement jedoch mit der zweiten Fluidleitung, d. h. in Gasflussrichtung hinter der Pumpe verbunden.

Dadurch, dass das Fallenelement lösbar mit der ersten oder der zweiten Fluidleitung verbunden ist, lässt sich nach erfolgter Extraktion der flüchtigen Komponenten aus der Probe das Fallenelement von der Vorrichtung lösen und zu einem Analysegerät, insbesondere zu einem Gaschromatographen transportieren.

Die lösbare Verbindung kann beispielsweise als Bajonettverschluss, als Injektionsport mit Septum oder mittels einer Flansch- oder Schraubenverbindung realisiert werden. Einem Fachmann sind weitere geeignete lösbare Verbindungen auf dem Gebiet der Labortechnik bekannt.

Vorzugsweise umfasst die erste Fluidleitung oder die zweite Fluidleitung zwei Teilfluidleitungen, wobei das Fallenelement zwischen diesen zwei Teilfluidleitungen angeordnet ist. Bei einer derartigen Ausgestaltung durchströmt der Gasfluss das Fallenelement vollständig.

Alternativ kann das Fallenelement nur einseitig mit der Fluidleitung verbunden werden, z. B. über ein Dreiwegventil. In diesem Fall kann beispielsweise das Dreiwegventil über eine automatische Schaltung verfügen, wobei der Gasfluss in das Fallenelement geleitet wird, was zu einem Überdruck im Fallenelement bei gleichzeitigem Unterdruck im Probengefäss führt. Anschliessend kann das Ventil umgeschaltet werden, so dass das im Fallenelement vorhandene Gas in das Probengefäss fliessen kann, wobei im Fallenelement ein Unterdruck und im Probengefäss ein Überdruck entsteht, da die Pumpe kontinuierlich Gas fördert.

Denkbar ist auch, dass das Fallenelement parallel zur Fluidleitung angeordnet ist, d. h. der Gasstrom über ein Ventil geteilt wird, wobei ein Teil des Gasstromes das Fallenelement durchströmt, während ein weiterer Teil durch die Fluidleitung strömt, wobei anschliessend beide Gasströme über ein zweites Ventil wieder zusammengeführt werden.

Vorzugsweise ragt die Zuleitung weiter in das Probengefäss als die Ableitung, so dass bei Aufnahme einer flüssigen Probe die Zuleitung in die Flüssigkeit und die Ableitung in einen Gasraum oberhalb der Flüssigkeit ragen.

Dadurch kann die erfindungsgemässe Vorrichtung in einem klassischen purge and trap Verfahren eingesetzt werden, bei dem das Lösungsgleichgewicht der flüchtigen Komponenten innerhalb der Flüssigkeit durch das Durchblubbern des Gases gestört werden kann, so dass diese flüchtigen Komponenten aus der Flüssigkeit ausgasen können.

Bevorzugt ist in Flussrichtung des geschlossenen Gaskreislaufes vor dem Fallenelement eine Wasserfalle in der ersten Fluidleitung oder der zweiten Fluidleitung angeordnet.

Durch die Wasserfalle kann Wasser aus dem Gasstrom entfernt werden, welches ansonsten bei einer anschliessenden Analyse der im Fallenelement zurückgehaltenen flüchtigen Komponenten in einem Gaschromatographen stören könnte. Einem Fachmann sind gängige Wasserfallen bekannt, beispielsweise durch Verwendung von Molekularsieben. Die Wasserfalle ist dabei vorzugsweise derart angeordnet, dass der gesamte Gasfluss die Wasserfalle durchströmt, bevor dieser in das Fallenelement strömt.

Das Fallenelement verfügt vorzugsweise über mindestens ein Ventil, mit dem sich das Fallenelement mit einem Analysegerät, insbesondere einem Gaschromatographen fluidisch verbinden lässt. Dadurch können die im Fallenelement zurückbehaltenen flüchtigen Komponenten zur Analyse in einer entsprechenden Vorrichtung überführt werden.

Vorzugsweise verfügt das Fallenelement über ein Heiz- und/oder Kühlelement. Ein Heizelement ermöglicht eine rasche und möglichst vollständige Desorption von im Fallenelement zurückgehaltenen flüchtigen Komponenten. Über ein Kühlelement kann die Temperatur des Fallenelements im Sinne einer Kühlfalle reduziert werden, um ein möglichst vollständiges Rückhalten der flüchtigen Komponenten im Fallenelement zu ermöglichen.

Die Zuleitung ist bevorzugt über ein zweites Ventil fluidisch mit einer Gaszufuhr verbindbar. Dadurch lässt sich vor einer Extraktion die Vorrichtung mit einem Gas, insbesondere einem Inertgas, fluten. Die Gaszufuhr kann beispielsweise in der Form einer Gasflasche mit Reduzierventil vorliegen, welche über eine Leitung mit dem zweiten Ventil der Zuleitung verbindbar ist.

Vorzugsweise ist das Fallenelement als Spritze ausgestaltet, wobei eine Nadel der Spritze in die zweite Fluidleitung eingesteckt ist und wobei das mindestens ein Sorbtionsmaterial im Zylinder der Spritze angeordnet ist.

Eine derartige Ausgestaltung des Fallenelements ermöglicht einen sehr einfachen Transfer des Fallenelements von der Vorrichtung zu einem Analysegerät. Zudem kann bei der Desorption von im Fallenelement zurückgehaltenen flüchtigen Substanzen das in das Analysegerät eingespritzte Volumen sehr genau kontrolliert werden, beispielsweise über das Gesamtvolumen der eingesetzten Spritze oder über einen verfahrbar in der Spritze angeordneten Kolben.

Derartige Fallenelemente sind im Stand der Technik bekannt und werden von der Anmelderin CTC Analytics unter dem Namen ITEX vertrieben.

Die vorliegende Anmeldung betrifft ferner ein Verfahren zur Extraktion einer flüchtigen Komponente aus einer Probe, insbesondere mit einer oben beschriebenen Vorrichtung. In einem ersten Schritt des erfindungsgemässen Verfahrens wird eine Probe in einem Probengefäss mit einer Zuleitung und einer Ableitung vorgelegt, wobei das Probengefäss anschliessend gasdicht verschlossen wird, insbesondere durch ein Septum. Anschliessend wird Gas aus dem Probengefäss oder einem über der Probe befindlichen Gasraum in die Ableitung gesaugt. Das Ansaugen erfolgt über eine erste Fluidleitung mit der Ableitung verbundenen Pumpe. Das Gas wird durch die Pumpe in eine zweite Zuleitung, welche fluidisch mit der Zuleitung verbunden ist, gefördert. Das Gas wird so im Sinne eines geschlossenen Gaskreislaufs zwischen Probengefäss und Pumpe zirkuliert. Flüchtige Komponenten der Probe werden in einem mit der ersten Fluidleitung oder der zweiten Fluidleitung fluidisch verbundenen Fallenelement zurückbehalten.

Durch das erfindungsgemässe Verfahren wird der Verbrauch eines Trägergases bei einem Extraktionsverfahren erheblich gesenkt, da das Trägergas durch den geschlossenen Kreislauf kontinuierlich umgesetzt wird. Zudem wird eine Kontamination der Umgebung durch lösliche Komponenten, welche in der verwendeten Falle nicht zurückgehalten werden, verhindert. Durch das kontinuierliche Absaugen und Einleiten des Gases herrscht zudem kein Überdruck im Probengefäss vor, was das Ausgasen der flüchtigen Komponenten beschleunigt. Da ein geschlossener Gaskreislauf vorliegt, hat das Verfahren den weiteren Vorteil, dass das Fallenelement quasi eine unendliche "breakthrough capacity" aufweist, d. h. dass theoretisch ein unendliches Gasvolumen durch das Fallenelement geleitet werden kann, ohne dass extrahierte flüchtige Substanzen aus dem Fallenelement austreten und verlorengehen können.

Vorteilhafterweise wird beim erfindungsgemässen Verfahren die eingesetzte Vorrichtung nach dem Verschliessen des Probengefässes mit einem inerten Trägergas geflutet. Das inerte Trägergas kann über eine mit der Vorrichtung verbindbare Gaszufuhr eingeleitet werden, z. B. über ein Ventil.

Bevorzugt wird durch ein erstes Ventil der Zuleitung ein Gasfluss des geschlossenen Gaskreislaufs für eine vorbestimmte Zeit gedrosselt oder unterbrochen, so dass im Probengefäss ein Unterdruck und im Fallenelement ein Überdruck entsteht.

Durch das Drosseln oder Unterbrechen des Gasflusses entsteht durch die Gasförderung der Pumpe der Unterdruck im Probengefäss sowie gleichzeitig der Überdruck im Fallenelement. Durch den Unterdruck können flüchtige Komponenten in der Probe leichter ausgegast werden, wodurch die Effizienz der Extraktion erhöht wird. Durch den Überdruck im Fallenelement wird die Absorbtionseffizienz zudem kurzzeitig erhöht.

Vorzugsweise erfolgt das Drosseln beziehungsweise Unterbrechen des Gasflusses durch ein automatisch gesteuertes erstes Ventil. Das erste Ventil kann durch eine entsprechende Steuerungseinheit kontrolliert werden. Insbesondere bevorzugt wird der Gasfluss in regelmässigen Zeitabständen gedrosselt beziehungsweise unterbrochen. Alternativ können auch andere Zeitabstände gewählt werden. Ferner ist es auch möglich, die Abstände beziehungsweise die Dauer der Drosselungen oder der Unterbrechungen in Abhängigkeit des Gasdruckes zu variieren. Beispielsweise kann eine Drosselung oder Unterbrechung solange aufrechterhalten werden, bis ein vorbestimmter Maximaldruck erreicht wird, worauf die Drosselung oder Unterbrechung aufgehoben wird, bis ein vorbestimmter Minimaldruck erreicht wird. Je nach Art der Probe, des Fallenelements sowie der zu extrahierenden flüchtigen Komponenten können Zeitpunkt sowie Dauer der Drosselungen und Unterbrechungen entsprechend variiert werden. Ferner kann auch die Stärke der Drosselung eingestellt und/oder variiert werden.

Insbesondere bevorzugt wird das erfindungsgemässe Verfahren mit einer Vorrichtung gemäss oben stehender Beschreibung durchgeführt, wobei als Fallenelement eine Spritze, welche mit der ersten oder der zweiten Fluidleitung verbunden wird, eingesetzt.

Bei dieser Ausführungsform des Verfahrens wird ein Kolben der Spritze periodisch vor- und zurückgefahren. Dadurch wird erreicht, dass Gas aus dem Gasfluss in den Zylinder der Spritze aufgesogen und wieder herausgedrückt wird, womit in der Spritze vorliegendes Sorbtionsmaterial die flüchtigen Komponenten aufnehmen kann.

Insbesondere bevorzugt wird bei dieser Ausführungsform des Verfahrens das Vor- und Zurückfahren des Kolbens mit der Drosselung beziehungsweise Unterbrechung des Gasflusses durch das erste Ventil koordiniert. Dabei wird vorzugsweise der Kolben bewegt, wenn der Gasfluss gedrosselt oder unterbrochen ist, womit eine Extraktion in kontrolliertem Überdruck ermöglicht wird.

Die Spritze kann über ein Dreiwegventil mit der ersten Zuleitung oder der zweiten Zuleitung verbunden sein. Dabei wird eine Schaltung des Dreiwegventils mit dem periodischen Verfahren des Kolbens koordiniert, so dass das Ventil die Spritze mit dem Gasfluss auf Seite der Ableitung verbindet, wenn der Kolben zurückgefahren wird und mit der Seite der Zuleitung, wenn der Kolben vorgefahren wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine erste Ausführungsform einer erfindungsgemässen Vorrichtung in einer schematischen Darstellung;
- Fig. 2: eine zweite Ausführungsform der erfindungsgemässen Vorrichtung mit einer Spritze als Fallenelement.

Grundsätzlich sind in den Figuren gleiche Teile mit gleichen Bezugszeichen versehen.

### Wege zur Ausführung der Erfindung

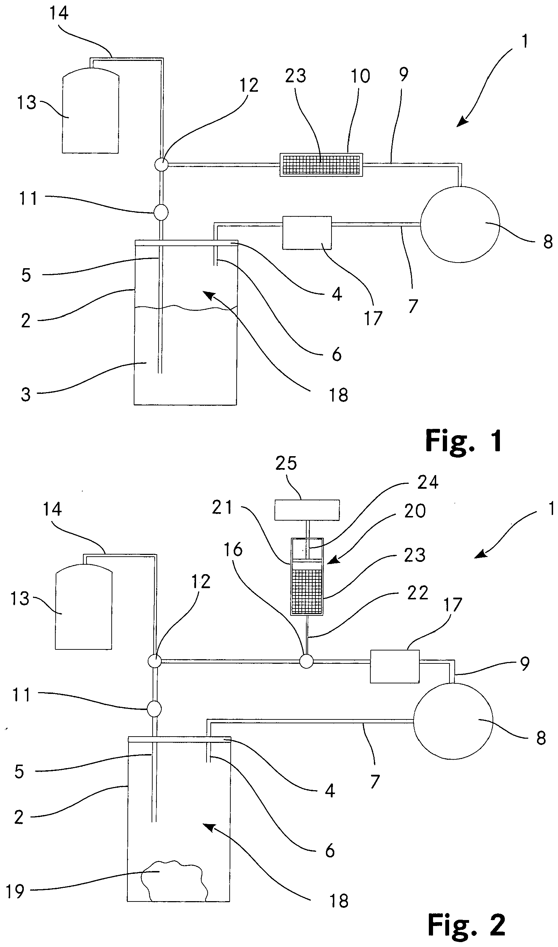

Die Figur 1 zeigt eine erste Ausführungsform einer erfindungsgemässen Vorrichtung 1 in einer schematischen Darstellung. Die Vorrichtung 1 verfügt über ein Probengefäss 3, welches sich bei der gezeigten Ausführungsform mit einem Deckel 4 gasdicht verschliessen lässt. Im Probegengefäss 2 ist eine flüssige Probe 3 dargestellt. Die flüssige Probe 3 ist derart im Probengefäss 2 eingefüllt, dass zwischen der flüssigen Probe 3 und dem Deckel 4 ein Gasraum 18 - der sogenannte "headspace" - entsteht. Durch den Deckel 4 ist eine Zuleitung 5 sowie eine Ableitung 6 in das Probengefäss 2 eingeführt. Die Zuleitung 5 ist dabei derart angeordnet, dass diese in die flüssige Probe 3 hineinragt, während die Ableitung 6 in den Gasraum 18 ragt.

Über eine erste Fluidleitung 7 ist die Ableitung 6 mit einer Ansaugöffnung einer Pumpe 8 verbunden. Bei der gezeigten Ausführungsform ist in der ersten Fluidleitung eine Wasserfalle 17 integriert. Durch die Pumpe 8 wird Gas aus dem Gasraum über die Ableitung 6 in die erste Fluidleitung 7 gesogen, wobei die Wasserfalle 17 im Gas vorhandenes Wasser sowie Feuchtigkeit bindet.

Die Pumpe 8 ist an einer Austrittsöffnung mit einer zweiten Fluidleitung 9 verbunden, in welche ein Fallenelement 10 lösbar integriert ist. Die zweite Fluidleitung verbindet die Pumpe 8 mit der Zuleitung. Durch den Betrieb der Pumpe 8 lässt sich ein geschlossener Gaskreislauf zwischen dem Probengefäss 2 über die erste Fluidleitung 7 zur Pumpe 8 sowie über die zweite Fluidleitung 9 zurück zum Probengefäss 2 erzeugen. Im Probengefäss 2 wird das Gas in die flüssige Probe 3 eingeleitet. Das Gas blubbert in der Folge durch die flüssige Probe 3 in den Gasraum 18, wo dieses durch die Ableitung 6 aufgesogen wird. Durch das Durchblubbern des Gases sowie die kontinuierlich erfolgte Zufuhr an Gas in den Gasraum 18 wird das Lösungsgleichgewicht gestört, so dass in der flüssigen Probe 3 befindliche flüchtige Komponenten in den Gasraum 18 ausgasen, wo diese durch die Ableitung 6 aufgesogen und zum Fallenelement 10 befördert werden.

Das Fallenelement 10 ist bei der gezeigten Ausführungsform in der zweiten Fluidleitung 9 integriert, d. h. dass die zweite Fluidleitung 9 in zwei Teilleitungen vorliegt, welche über das Fallenelement 10 miteinander verbunden werden. Das Fallenelement 10 ist somit mit der zweiten Fluidleitung 9 in Serie geschaltet.

Die Zuleitung 5 verfügt über ein erstes Ventil 11, mit dem sich der Gasfluss durch die Zuleitung 5 drosseln oder unterbrechen lässt. Dadurch kann für eine vorbestimmte Zeit im Gasraum 18 im Probengefäss 2 ein Unterdruck sowie im Fallenelement 10 ein Überdruck erzeugt werden, da die Pumpe 8 kontinuierlich Gas fördert.

Zwischen der zweiten Fluidleitung 9 sowie der Zuleitung 5 ist ein zweites Ventil 12 angeordnet, mit dem sich eine Gaszufuhr 13, welche im gezeigten Ausführungsbeispiel in der Form einer Gasflasche vorliegt, verbinden lässt. Die Gaszufuhr 13 ist über eine Gasleitung 14 mit dem zweiten Ventil 12 verbunden.

Die Fig. 2 zeigt eine zweite Ausführungsform einer erfindungsgemässen Vorrichtung 1. Im Unterschied zur Ausführungsform gemäss Fig. 1 ist im Probengefäss 2 eine feste Probe 19 angeordnet. Zwischen dem Deckel 4 des Probengefässes 2 sowie der festen Probe 19 ist der Gasraum 18. Zudem ist bei dieser Ausführungsform die Wasserfalle in der zweiten Fluidleitung 9 integriert.

Ein weiterer Unterschied besteht darin, dass als Fallenelement eine Spritze 20 eingesetzt ist. Die Spritze umfasst einen Zylinder 21 sowie eine Nadel 22, welche in einen Port 16, der sich in der zweiten Fluidleitung 9 befindet, eingesteckt ist. Innerhalb des Zylinders 21 ist ein Sorbtionsmaterial 23 angeordnet, mit welchem sich die flüchtigen Komponenten binden lassen. Oberhalb des Sorbtionsmaterials 23 befindet sich ein Kolben 24, mit dem sich durch eine Auf- und Abbewegung das innerhalb des Zylinders 21 befindliche Volumen des Gases regulieren lässt. Die automatische Auf- und Abbewegung des Kolbens 24 wird durch einen Betätigungsmotor 25 sichergestellt. Durch eine periodische Bewegung des Kolbens 24 kann Gas von der zweiten Fluidleitung 9 durch das Sorbtionsmaterial 23 gezogen und wieder ausgestossen werden.

Anstatt des Ports 16 könnte alternativ ein Dreiwegventil eingesetzt werden, wobei bei der Aufwärtsbewegung des Kolbens 24 dieses die Nadel 22 mit dem pumpenseitigen Teil der zweiten Fluidleitung 9 verbindet und bei der Abwärtsbewegung mit dem zulaufseitigen Teil.

## Patentansprüche

1. Vorrichtung zur Extraktion flüchtiger Komponenten aus einer Probe (3; 19), umfassend:
a) ein Probengefäss (2) zur Aufnahme der Probe (3; 19), wobei das Probengefäss (2) gasdicht verschlossen ist;
b) eine Ableitung (6) und eine Zuleitung (5), welche in das Probengefässes (2) ragen, wobei die Zuleitung (5) über ein erstes Ventil (11) verfügt, mit dem sich ein Gasfluss durch die Zuleitung (5) drosseln und/oder unterbrechen lässt;
c) eine Pumpe (8) mit einer Ansaugöffnung und einer Austrittsöffnung;
d) eine erste Fluidleitung (7), welche die Ableitung (6) mit der Ansaugöffnung der Pumpe (8) fluidisch verbindet;
**dadurch gekennzeichnet, dass**
e) eine zweite Fluidleitung (9) die Zuleitung (5) mit der Austrittsöffnung der Pumpe (8) fluidisch verbindet, so dass Probengefäss (2), Zuleitung (5), Ableitung (6) und Pumpe (8) einen geschlossenen Gaskreislauf bilden, wobei ein Fallenelement (10; 20) mit wenigstens einem Sorbtionsmaterial (23) mit der ersten Fluidleitung (7) oder der zweiten Fluidleitung (9) fluidisch verbunden ist.

2. Vorrichtung gemäss Anspruch 1, **dadurch gekennzeichnet, dass** das Fallenelement (10; 20) lösbar mit der ersten Fluidleitung (7) oder der zweiten Fluidleitung (9) verbunden ist.

3. Vorrichtung gemäss einem der Ansprüche 1 oder 2, **dadurch gekennzeichnet, dass** die erste Fluidleitung (7) oder die zweite Fluidleitung (9) zwei Teilfluidleitungen umfasst, wobei das Fallenelement (10; 20) zwischen diesen zwei Teilfluidleitungen angeordnet ist.

4. Vorrichtung gemäss einem der Ansprüche 1 bis 3, **dadurch gekennzeichnet, dass** die Zuleitung (5) weiter in das Probengefäss ragt als die Ableitung (6), so dass bei Aufnahme einer flüssigen Probe (3) die Zuleitung (5) in die flüssige Probe (3) und die Ableitung (6) in einen Gasraum (18) oberhalb der flüssigen Probe (3) ragen.

5. Vorrichtung gemäss einem der Ansprüche 1 bis 4, **dadurch gekennzeichnet, dass** in Flussrichtung des geschlossenen Gaskreislaufes vor dem Fallenelement (10; 20) eine Wasserfalle (17) in der ersten Fluidleitung (7) oder der zweiten Fluidleitung (9) angeordnet ist.

6. Vorrichtung gemäss einem der Ansprüche 1 oder 3 bis 5, **dadurch gekennzeichnet, dass** das Fallenelement (10; 20) über mindestens ein Ventil verfügt, mit dem sich das Fallenelement (10; 20) mit einem Analysegerät, insbesondere einem Gaschromatographen, fluidisch verbinden lässt.

7. Vorrichtung gemäss einem der Ansprüche 1 bis 6, **dadurch gekennzeichnet, dass** das Fallenelement (10; 20) über ein Heiz- und/oder Kühlelement verfügt.

8. Vorrichtung gemäss einem der Ansprüche 1 bis 7, **dadurch gekennzeichnet, dass** die Zuleitung (5) über ein zweites Ventil (12) fluidisch mit einer Gaszufuhr (13) verbindbar ist.

9. Vorrichtung gemäss einem der Ansprüche 1 bis 8, **dadurch gekennzeichnet, dass** das Fallenelement als Spritze (20) ausgestaltet ist, wobei eine Nadel (22) der Spritze (20) in die zweite Fluidleitung (9) eingesteckt ist und das mindestens ein Sorbtionsmaterial (23) im Zylinder (21) der Spritze (20) angeordnet ist.

10. Verfahren zur Extraktion flüchtiger Komponenten aus einer Probe (3; 19), insbesondere mit einer Vorrichtung gemäss einem der Ansprüche 1 bis 9, umfassend die Schritte:
a) Vorlegen der Probe (3; 19) in einem Probengefäss (2) mit einer Zuleitung (5) und einer Ableitung (7), wobei das Probengefäss (2) anschliessend gasdicht verschlossen wird, insbesondere durch ein Septum;
b) Ansaugen von Gas aus dem Probengefäss (2) oder aus einem über der Probe (3; 19) befindlichen Gasraum (18) im Probengefäss (2) in die Ableitung (6) durch eine über eine erste Fluidleitung (7) fluidisch mit der Ableitung (6) verbundenen Pumpe (8);
**dadurch gekennzeichnet, dass**
c) das Gas durch die Pumpe (8) in eine zweite Fluidleitung (9), welche mit der Zuleitung (5) fluidisch verbunden ist, gefördert wird, so dass das Gas im Sinne eines geschlossenen Gaskreislaufs zwischen Probengefäss (2) und Pumpe (8) zirkuliert, wobei flüchtige Komponenten der Probe (3; 19), welche aus der Probe (3; 19) ausgegast sind, durch ein Absorptionsmaterial (23) eines mit der ersten Fluidleitung (7) oder der zweiten Fluidleitung (9) fluidisch verbundenen Fallenelements (10; 23) zurückbehalten werden.

11. Verfahren gemäss Anspruch 10, **dadurch gekennzeichnet, dass** durch ein erstes Ventil (12) der Zuleitung (5) ein Gasfluss des geschlossenen Gaskreislaufs für eine vorbestimmte Zeit gedrosselt oder unterbrochen wird, so dass im Probengefäss (2) ein Unterdruck und im Fallenelement (10; 20) ein Überdruck entsteht.

12. Verfahren gemäss einem der Ansprüche 10 oder 11 zur Extraktion von flüchtigen Komponenten aus einer Probe mit einer Vorrichtung (1) gemäss Anspruch 9, **dadurch gekennzeichnet, dass** periodisch ein Kolben (24) der Spritze (20) im Zylinder (21) vor- und zurückgefahren wird.

## Claims

1. Device for extracting volatile components from a sample (3; 19), comprising:
a) a sample vessel (2) for receiving the sample (3; 19), wherein the sample vessel (2) is closed in a gas-tight manner;
b) a discharge line (6) and a supply line (5), which protrude into the sample vessel (2), wherein the supply line (5) has a first valve (11) with which a flow of gas through the supply line (5) can be throttled and/or interrupted;
c) a pump (8) with a suction opening and an output opening;
d) a first fluid line (7), which fluidically connects the discharge line (6) to the suction opening of the pump (8);
**characterized in that**
e) a second fluid line (9) fluidically connects the supply line (5) to the output opening of the pump (8), such that sample vessel (2), supply line (5), discharge line (6) and pump (8) form a closed gas circuit, wherein a trap element (10; 20) with at least one sorption material (23) is fluidically connected to the first fluid line (7) or the second fluid line (9).

2. Device according to Claim 1, **characterized in that** the trap element (10; 20) is connected releasably to the first fluid line (7) or the second fluid line (9).

3. Device according to either of Claims 1 and 2, **characterized in that** the first fluid line (7) or the second fluid line (9) comprises two subsidiary fluid lines, wherein the trap element (10; 20) is arranged between these two subsidiary fluid lines.

4. Device according to one of Claims 1 to 3, **characterized in that** the supply line (5) protrudes farther into the sample vessel than the discharge line (6), such that, when a liquid sample (3) is received, the supply line (5) protrudes into the liquid sample (3) and the discharge line (6) protrudes into a gas space (18) above the liquid sample (3).

5. Device according to one of Claims 1 to 4, **characterized in that**, in the direction of flow of the closed gas circuit, a water trap (17) is arranged upstream from the trap element (10; 20) in the first fluid line (7) or the second fluid line (9).

6. Device according to one of Claims 1 or 3 to 5, **characterized in that** the trap element (10; 20) has at least one valve with which the trap element (10; 20) can be fluidically connected to an analysis apparatus, in particular to a gas chromatograph.

7. Device according to one of Claims 1 to 6, **characterized in that** the trap element (10; 20) has a heating and/or cooling element.

8. Device according to one of Claims 1 to 7, **characterized in that** the supply line (5) can be fluidically connected to a gas reservoir (13) via a second valve (12).

9. Device according to one of Claims 1 to 8, **characterized in that** the trap element is designed as a syringe (20), wherein a needle (22) of the syringe (20) is inserted into the second fluid line (9), and the at least one sorption material (23) is arranged in the barrel (21) of the syringe (20).

10. Method for extracting volatile components from a sample (3; 19), in particular using a device according to one of Claims 1 to 9, said method comprising the following steps:
a) arranging the sample (3; 19) in a sample vessel (2) with a supply line (5) and a discharge line (7), wherein the sample vessel (2) is then closed in a gas-tight manner, in particular by a septum;
b) aspirating gas out of the sample vessel (2), or out of a gas space (18) located above the sample (3; 19) in the sample vessel (2), into the discharge line (6) by a pump (8) connected fluidically to the discharge line (6) via a first fluid line (7);
**characterized in that**
c) the gas is conveyed by the pump (8) into a second fluid line (9), which is fluidically connected to the supply line (5), such that the gas circulates in the sense of a closed gas circuit between sample vessel (2) and pump (8), wherein volatile components of the sample (3; 19), which are outgassed from the sample (3; 19), are held back by an absorption material (23) of a trap element (10; 23) fluidically connected to the first fluid line (7) or the second fluid line (9).

11. Method according to Claim 10, **characterized in that** a gas flow of the closed gas circuit is throttled or interrupted for a predetermined time by a first valve (12) of the supply line (5), such that an underpressure arises in the sample vessel (2) and an overpressure arises in the trap element (10; 20).

12. Method according to either of Claims 10 and 11 for extracting volatile components from a sample using a device (1) according to Claim 9, **characterized in that** a piston (24) of the syringe (20) is periodically driven to and fro in the barrel (21).

## Revendications

1. Dispositif d'extraction de composants volatils à partir d'un échantillon (3 ; 19), comprenant :
a) un récipient d'échantillons (2) destiné à recevoir l'échantillon (3 ; 19), le récipient d'échantillons (2) étant fermé de façon étanche aux gaz ;
b) une conduite d'évacuation (6) et une conduite d'amenée (5) qui dépassent dans le récipient d'échantillons (2), la conduite d'amenée (5) disposant d'une première vanne (11) avec laquelle un flux de gaz à travers la conduite d'amenée (5) peut être étranglé et/ou interrompu ;
c) une pompe (8) avec une ouverture d'aspiration et une ouverture de sortie ;
d) une première conduite de fluide (7) qui raccorde fluidiquement la conduite d'évacuation (6) à l'ouverture d'aspiration de la pompe (8) ;
**caractérisé en ce que**
e) une deuxième conduite de fluide (9) raccorde fluidiquement la conduite d'amenée (5) à l'ouverture de sortie de la pompe (8) de telle sorte que le récipient d'échantillons (2), la conduite d'amenée (5), la conduite d'évacuation (6) et la pompe (8) forment un circuit de gaz fermé, un élément de piégeage (10 ; 20) avec au moins un matériau de sorption (23) étant raccordé fluidiquement à la première conduite de fluide (7) ou à la deuxième conduite de fluide (9).

2. Dispositif selon la revendication 1, **caractérisé en ce que** l'élément de piégeage (10 ; 20) est raccordé de façon détachable à la première conduite de fluide (7) ou à la deuxième conduite de fluide (9).

3. Dispositif selon l'une des revendications 1 ou 2, **caractérisé en ce que** la première conduite de fluide (7) ou la deuxième conduite de fluide (9) comprend deux conduites de fluide partielles, l'élément de piégeage (10 ; 20) étant disposé entre ces deux conduites de fluide partielles.

4. Dispositif selon l'une des revendications 1 à 3, **caractérisé en ce que** la conduite d'amenée (5) dépasse plus loin dans le récipient d'échantillons que la conduite d'évacuation (6) de telle sorte que, lors de la réception d'un échantillon (3) liquide, la conduite d'amenée (5) dépasse dans l'échantillon (3) liquide et la conduite d'évacuation (6) dépasse dans une chambre à gaz (18) au-dessus de l'échantillon (3) liquide.

5. Dispositif selon l'une des revendications 1 à 4, **caractérisé en ce que**, dans la direction de flux du circuit de gaz fermé, un piège à eau (17) est disposé dans la première conduite de fluide (7) ou la deuxième conduite de fluide (9) en amont de l'élément de piégeage (10 ; 20).

6. Dispositif selon l'une des revendications 1 ou 3 à 5, **caractérisé en ce que** l'élément de piégeage (10 ; 20) dispose d'au moins une vanne avec laquelle l'élément de piégeage (10 ; 20) peut être raccordé fluidiquement à un appareil d'analyse, en particulier un chromatographe en phase gazeuse.

7. Dispositif selon l'une des revendications 1 à 6, **caractérisé en ce que** l'élément de captation (10 ; 20) dispose d'un élément de chauffage et/ou de refroidissement.

8. Dispositif selon l'une des revendications 1 à 7, **caractérisé en ce que** la conduite d'amenée (5) peut être raccordée fluidiquement à une amenée de gaz (13) par le biais d'une deuxième vanne (12).

9. Dispositif selon l'une des revendications 1 à 8, **caractérisé en ce que** l'élément de piégeage est constitué en tant que seringue (20), une aiguille (22) de la seringue (20) étant enfichée dans la deuxième conduite de fluide (9), et le matériau de sorption (23) au moins au nombre de un étant disposé dans le cylindre (21) de la seringue (20).

10. Procédé d'extraction de composants volatils à partir d'un échantillon (3 ; 19), en particulier avec un dispositif selon l'une des revendications 1 à 9, comprenant les étapes suivantes :
a) présentation de l'échantillon (3 ; 19) dans un récipient d'échantillons (2) avec une conduite d'amenée (5) et une conduite d'évacuation (7), le récipient d'échantillons (2) étant ensuite fermé de façon étanche aux gaz, en particulier par un septum ;
b) aspiration de gaz à partir du récipient d'échantillons (2) ou à partir d'une chambre à gaz (18) située au-dessus de l'échantillon (3 ; 19) dans le récipient d'échantillons (2) dans la conduite d'évacuation (6) par une pompe (8) raccordée fluidiquement à la conduite d'évacuation (6) par le biais d'une première conduite de fluide (7). **caractérisé en ce que**
c) le gaz est transporté par la pompe (8) dans une deuxième conduite de fluide (9) qui est raccordée fluidiquement à la conduite d'amenée (5) de telle sorte que le gaz circule au sens d'un circuit de gaz fermé entre le récipient d'échantillons (2) et la pompe (8), des composants volatils de l'échantillon (3 ; 19) qui sont dégazés à partir de l'échantillon (3 ; 19) étant retenus par un matériau d'absorption (23) d'un élément de piégeage (10 ; 23) raccordé fluidiquement à la première conduite de fluide (7) ou à la deuxième conduite de fluide (9) .

11. Procédé selon la revendication 10, **caractérisé en ce qu'**un flux de gaz du circuit de gaz fermé est étranglé ou interrompu pendant une durée prédéfinie par une première vanne (12) de la conduite d'amenée (5) de telle sorte qu'une dépression apparaît dans le récipient d'échantillons (2) et une surpression apparaît dans l'élément de piégeage (10 ; 20).

12. Procédé selon l'une des revendications 10 ou 11 destiné à l'extraction de composants volatils à partir d'un échantillon avec un dispositif (1) selon la revendication 9, **caractérisé en ce qu'**un piston (24) de la seringue (20) est déplacé périodiquement vers l'avant et vers l'arrière dans le cylindre (21).
